(19) **Europäisches Patentamt**

**European Patent Office**

**Office européen des brevets**

(11) Veröffentlichungsnummer : **0 113 110**
**B1**

(12) **EUROPÄISCHE PATENTSCHRIFT**

(45) Veröffentlichungstag der Patentschrift :
16.06.87

(21) Anmeldenummer : 83113031.5

(22) Anmeldetag : 23.12.83

(51) Int. Cl.⁴ : **B 60 N   1/00**

---

(54) **Gelenkbeschlag für Sitze mit neigungsverstellbarer Rückenlehne.**

---

(30) Priorität : **29.12.82 DE 3248489**

(43) Veröffentlichungstag der Anmeldung :
**11.07.84 Patentblatt 84/28**

(45) Bekanntmachung des Hinweises auf die Patenterteilung : **16.06.87 Patentblatt 87/25**

(84) Benannte Vertragsstaaten :
**DE FR GB SE**

(56) Entgegenhaltungen :
**DE-A- 2 924 582**
**FR-A- 2 375 069**

(73) Patentinhaber : **C. Rob. Hammerstein GmbH**
**Postfach 13 01 18 Merscheiderstrasse 167**
**D-5650 Solingen 13 (DE)**

(72) Erfinder : **Bauer, Heinz**
**Hammerstrasse 9**
**D-5650 Solingen (DE)**
Erfinder : **Frohnhaus, Ernst-Reiner**
**Hammerstrasse 13**
**D-5650 Solingen (DE)**
Erfinder : **Becker, Burckhard, Dipl. Ing.**
**Obenkatternberg 25**
**D-5650 Solingen (DE)**
Erfinder : **Gedig, Alfred, Dipl. Ing.**
**Hammerstrasse 28**
**D-5650 Solingen (DE)**

(74) Vertreter : **Bauer, Wulf, Dr.**
**Wolfgang-Müller-Strasse 12**
**D-5000 Köln 51 (Marienburg) (DE)**

## Beschreibung

Die Erfindung bezieht sich auf einen Gelenkbeschlag für Sitze mit einer gegenüber einem Sitzgestell neigungsverstellbaren Rückenlehne, insbesondere Kraftfahrzeugsitze, mit einem an der Rückenlehne zu befestigenden, schwenkbaren Gelenkarm, mit einem am Sitzgestell zu befestigenden, ortsfesten Gelenkarm und mit einer Stellvorrichtung für die Winkellage der beiden Gelenkarme zueinander und ihrer Arretierung gegeneinander, die aufweist

— einen Innenzahnkranz, der einem der beiden Gelenkarme zugeordnet ist,

— ein Stirnrad, das mit dem Innenzahnkranz in Eingriff steht, sich innerhalb des Innenzahnkranzes befindet, das dem anderen Gelenkarm zugeordnet ist und dessen Kopfkreisdurchmesser mindestens um eine Zahnhöhe kleiner ist als der Fußkreisdurchmesser des Innenzahnkranzes,

— eine an einem Gelenkarm gelagerte Drehachse,

— einen um diese Drehachse drehbaren Handgriff und

— eine auf dieser Drehachse angeordnete, mittels des Handgriffs drehbare Exzenterfläche

a. die eine Exzentrizität aufweist, die zumindest der halben Differenz zwischen dem Fußkreisdurchmesser des Innenzahnkranzes und dem Kopfkreisdurchmesser des Stirnrades entspricht und so bemessen ist, daß eine Selbsthemmung zwischen dem Innenzahnkranz und dem Stirnrad gegeben ist, und

b. die sich in Anlage an einer zylindrischen Führungsfläche eines Zahnteils befindet.

Dieser aus der DE-A 12 97 496 bekannte Gelenkbeschlag ist kompakt, aus nur wenigen Einzelteilen aufgebaut, erreicht eine hohe Untersetzung und gewährleistet insbesondere, daß die beiden Gelenkarme des Gelenkbeschlages stets arretiert sind, auch dann, wenn ihre Winkellage zueinander mittels des Handgriffs verändert wird. Anders ausgedrückt sperrt der bekannte Gelenkbeschlag stets bei in Rückrichtung, also über die Rückenlehne und dem daran befestigten, schwenkbaren Gelenkarm angreifenden Kräften. Dies ist bei Unfällen von besonderem Vorteil, da ein Passagier auch dann noch durch die Rückenlehne seines Sitzes abgestützt wird, wenn er während des Unfalls den Gelenkbeschlag der Rückenlehne verstellt.

Bei dem aus der FR-A-23 75 069 vorbekannten Gelenkbeschlag ist mit dem Handgriff ein Exzenterring verbunden, der eine über seinen Umfang gleiche Dicke aufweist und einen Spalt zwischen einer mit dem Stirnrad verbundenen Kreisscheibe und einem Ringmantel ausfüllt, der mit dem Innenzahnkranz verbunden ist. Der Exzenterring hat dabei einen größeren Durchmesser als die Verzahnung des Innenzahnkranzes, er befindet sich seitlich des Innenzahnkranzes.

Schließlich ist aus der DE-A-29 24 582 ein Gelenkbeschlag bekannt, der jedoch nicht mit Zahnrädern ausgerüstet ist. Bei ihm wird die Exzenterfläche durch die Innenfläche einer exzentrischen Bohrung des Handgriffs gebildet.

Bei dem Gelenkbeschlag der eingangsgenannten Art nach der DE-A-1 97 496 ist die Exzenterfläche einstückig mit der Drehachse ausgebildet, die Drehachse ist drehfest mit dem Handgriff verbunden. Der Durchmesser der zylindrischen Exzenterfläche beträgt etwa ein Drittel des Kopfkreisdurchmessers des Stirnrades, das auf diesen Exzenter aufgesteckt ist und beim Drehen der Achse mittels des Drehknopfes auf Grund der dabei mitbewegten Exzenterfläche eine Taumelbewegung durchführt. Auf Grund dieser im Durchmesser relativ kleinen Exzenterfläche ist der bekannte Gelenkbeschlag stets mit einem gewissen Spiel behaftet, da bei der Herstellung dieser Exzenterfläche Ungenauigkeiten nie ganz zu vermeiden sind. Weiterhin muß die Drehachse drehfest mit dem Handgriff verbunden werden, was besondere Einrichtungen erfordert. Zum einen muß eine paßgenaue Aufnahmefläche für einen Endbereich der Drehachse im Handgriff vorgesehen sein, diese muß die bei der Betätigung des Handgriffs ausgeübten Kräfte auf die Drehachse übertragen können und schließlich muß die Drehachse am Handgriff befestigt sein, was bei dem bekannten Gelenkbeschlag durch einen Sprengring erfolgt. Schließlich ist der Zusammenbau des Gelenkbeschlags aus seinen Einzelteilen mit Nachteilen behaftet, die zum einen in der Anzahl der zu montierenden Einzelteile und zum anderen in der Anzahl der einzelnen Montageoperationen begründet sind. Eine besondere Schwierigkeit bereitet schließlich die Lagerung des Innenzahnkranzes auf der Drehachse, da hierfür eine Überbrückung notwendig ist. Während diese Überbrückung bei dem als bekannt vorausgesetzten Gelenkbeschlag noch durch ein zusätzliches, neben dem Stirnrad befindliches Teil erreicht wird, wird in Weiterbildung in der genannten DE-A-16 80 128 gelehrt, die Überbrückung durch einstückige Ausdrückung aus dem Innenzahnkranz zu schaffen. Dadurch wird zwar ein zusätzliches Teil vermieden, aber es ist ein spezieller Bearbeitungsvorgang, bei dem präzise Verformungsbedingungen eingehalten werden müssen, notwendig.

Ausgehend von dem als bekannt vorausgesetzten Gelenkbeschlag ist es Aufgabe der Erfindung, die Nachteile dieses bekannten Gelenkbeschlags zu vermeiden und einen Gelenkbeschlag zu schaffen, der sich aus weniger Einzelteilen als die bekannten Gelenkbeschläge zusammensetzt, spielfreier als die bekannten Gelenkbeschläge ausbilden läßt und den bekannten Gelenkbeschlägen gegenüber Vorteile bei der Montage aufweist. Diese Aufgabe wird bei einem Gelenkbeschlag der eingangsgenannten Art dadurch gelöst, daß die Exzenterfläche durch eine Innenfläche einer exzentrischen Bohrung des Handgriffs gebildet ist, sich am von der Bedienungsseite abgewandten Teilstück des Handgriffs befindet und führend einen zylindrischen Außenmantel des Innenzahnkranzes, der einen größeren Durchmesser als die Verzahnung des Innenzahnkranzes aufweist, umgreift, und daß die Exzenterfläche und der Außenmantel mit Vorspannung aneinanderliegen.

Erfindungsgemäß befindet sich die Exzenterfläche somit außerhalb (und nicht innerhalb) der Zahnkreise des Innenzahnkranzes bzw. des Stirnrades. Dadurch hat die Exzenterfläche erstens einen relativ großen Durchmesser, wodurch der Gelenkbeschlag bei gleicher Absolutgenauigkeit der Exzenterfläche eine verbesserte Spielfreiheit aufweist. Zweitens können auf Grund der relativ großen Anlagefläche zwischen Exzenterfläche und Führungsfläche des zugehörigen, eine Taumelbewegung ausführenden Zahnteils für das Material der Exzenterfläche Werkstoffe eingesetzt werden, die eine geringere Härte als die bei dem bekannten Gelenkbeschlag benötigten Werkstoffe (zumeist Stahl) haben. Dadurch kann aber wiederum für das Material der Exzenterfläche ein Werkstoff gewählt werden, der einen hohen Reibungsbeiwert gegenüber dem Material der Führungsfläche, also des zugehörigen Zahnteils, aufweist. In bevorzugter Weiterbildung der Erfindung wird daher vorgeschlagen, den Handgriff aus Kunststoff zu fertigen. Kunststoff hat gegenüber Stahl einen dreimal höheren Reibungsbeiwert als Stahl gegen Stahl. Dadurch kann die Exzentrizität beispielsweise größer gewählt werden, es können größere Zähne, es kann eine größere Zahntiefe verwendet werden. Weiterhin eröffnet sich eine wesentlich größere Spanne im Übersetzungsverhältnis zwischen den beiden Zahnteilen, als für den bekannten Gelenkbeschlag möglich ist. Bei diesem ist das Untersetzungsverhältnis für den praktischen Gebrauch relativ hoch, was sich insbesondere bei Liegesitzen als sehr nachteilig erweist, weil eine große Anzahl von Umdrehungen des Handgriffs notwendig sind, um die Rückenlehne um etwa 90° zu schwenken. Auf Grund des größeren Freiraums in der Bemessung der Zähne der Zahnteile kann die Zahnbelastung so gering gewählt werden, daß Zahnteile aus Aluminiumdruckguß oder Kunststoff eingesetzt werden können.

Schließlich ermöglicht die relativ große Exzenterfläche drittens, daß eine Überbrückung des Innenzahnkranzes nicht notwendig ist. Weiterhin ermöglicht sie eine besonders einfache Ausbildung der Drehachse. Diese muß nicht drehfest mit dem Handgriff verbunden sein, da sie nicht mehr der Kraftübertragung zwischen dem Handgriff und der Exzenterfläche dient.

In vorteilhafter Weiterbildung der Erfindung wird vorgeschlagen, die mit der Exzenterfläche zusammenwirkende Führungsfläche am Innenzahnkranz anzuordnen. Dadurch werden die beiden Zahnteile einfach geformte und einfach zu fertigende Teile, die sich beispielsweise durch Stanzen herstellen lassen.

Eine besonders vorteilhafte Weiterbildung der Erfindung wird darin gesehen, daß die Drehachse einen größeren Durchmesser aufweist als die Exzenterfläche und daß insbesondere die Drehachse durch den zylindrischen Außenmantel des Teilstücks des Handgriffs gebildet wird, an dem die exzentrische Bohrung vorgesehen ist. Diese Drehachse wird dann in einem Führungsrand an einem Gelenkarm, vorzugsweise dem ortsfesten Gelenkarm, geführt. Dadurch wird die Ausbildung der Drehachse besonders einfach, insbesondere wenn sie — wie vorgeschlagen — einstückig mit dem Handgriff zusammenhängt, wodurch sich Lagerhaltung und Montage der Teile des Gelenkbeschlags weiter vereinfachen.

Weitere Merkmale und Vorteile der Erfindung ergeben sich aus den übrigen Ansprüchen sowie der nun folgenden Beschreibung eines bevorzugten Ausführungsbeispiels, das unter Bezugnahme auf die Figur näher erläutert wird. Diese Figur zeigt ein Montagebild eines Gelenkbeschlags nach der Erfindung.

Bei diesem Gelenkbeschlag für die Kraftfahrzeugsitze ist ein schwenkbarer Gelenkarm 20 um eine in einem ortsfesten Gelenkarm 22 gelagerte Schwenkachse 24 schwenkbar. Die Winkellage der beiden Gelenkarme 20, 22 zueinander wird mittels einer Stellvorrichtung 26 eingestellt und arretiert, auf die im folgenden eingegangen wird :

Über die Schwenkachse 24 ist der schwenkbare Gelenkarm 20 starr mit einem Stirnrad 28 verbunden, das sich auf der, dem schwenkbaren Gelenkarm 20 gegenüberliegenden Seite des ortsfesten Gelenkarms 22 befindet. Ihm ist ein Innenzahnkranz 30 zugeordnet, der in Montageposition das Stirnrad 28 umringt und dabei sind die Zähne von Stirnrad 28 und Innenzahnkranz 30 teilweise im Eingriff miteinander.

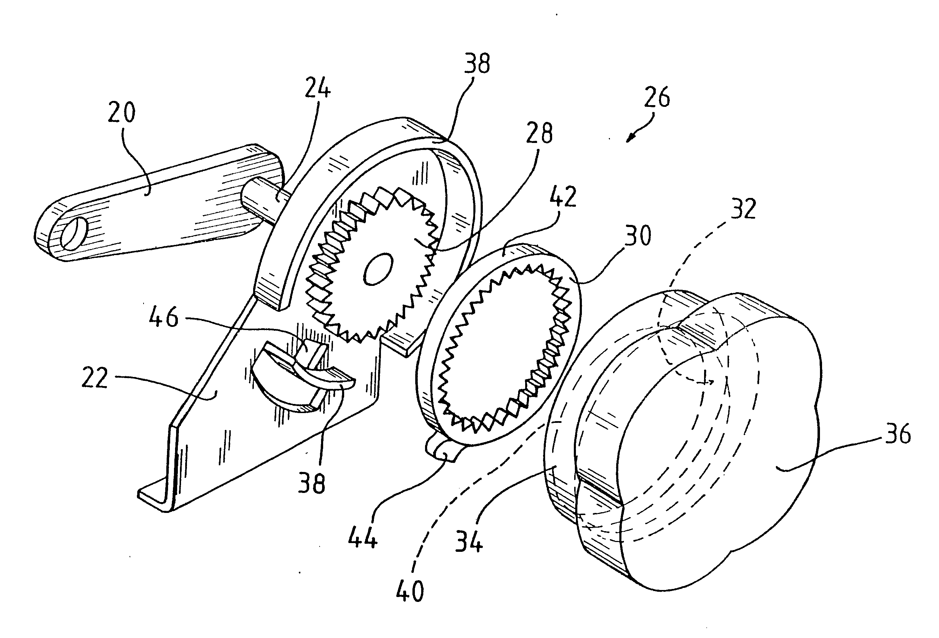

In bekannter Weise ist der Kopfkreisdurchmesser des Stirnrades 28 um mindestens eine Zahnhöhe kleiner als der Fußkreisdurchmesser des Innenzahnkranzes, hier wird auf die Offenbarung in der DE-A-12 97 496 verwiesen, siehe dort insbesondere Figur 3.

Die Lage der beiden Zahnteile, nämlich Stirnrad 28 und Innenzahnkranz 30, zueinander, wird mittels einer Exzenterfläche 32 und einer Drehachse 34 fixiert, die einstückiges Bestandteil eines Handgriffs 36 sind. Die Drehachse 34 bildet einen Teil des Außenmantels des Handgriffs 36 und ist in einem Führungsrand 38 des ortsfesten Gelenkarms 22 geführt. Die demgegenüber im Durchmesser kleinere Exzenterfläche, die sich an demselben, von der Bedienungsseite abgewandten Teilstück des Handgriffs 36 befindet, wird durch die Innenfläche einer exzentrischen Bohrung 40 gebildet und umgreift führend den zylindrischen Außenmantel 42 des Innenzahnkranzes 30. In diesem wiederum befindet sich das Stirnrad 28.

Von außen nach innen gesehen ergibt sich damit folgende Anordnung :

1. Drehachse 34, geführt und drehbar gelagert in dem sie übergreifenden Führungsrand 38, der ortsfest ist.

2. Exzenteranordnung mit Exzenterfläche 32 und Außenmantel 42 des Innenzahnkranzes 30, der sich innerhalb der exzentrischen Bohrung 40 des Handgriffs 36 befindet.

3. Zahneingriff von Stirnrad 28 und Innenzahnkranz 30.

4. Schwenkachse 24 des schwenkbaren Gelenkarms 20.

Um, wie an sich aus der DE-A-17 55 421 bekannt ist, die Taumelbewegungen des Innenzahnkranzes 30 nicht auf den ortsfesten Gelenkarm 22 zu übertragen, diesen ortsfesten Gelenkarm 22 also von den Taumelbewegungen abzukoppeln, ist am ringförmigen Innenzahnkranz 30 ein radial nach außen und axial vorstehender Vorsprung 44 angeordnet, der in Montageposition in eine Ausnehmung 46 im zugeordneten, ortsfesten Gelenkarm 22 eingreift. Der Vorsprung 44 ist, wie in der Figur angedeutet, leicht ballig ausgebildet, während die Ausnehmung 46 im wesentlichen Rechteckform hat und sich in Radialrichtung erstreckt. Auf Grund der balligen Ausbildung des Vorsprungs 44 kann der Innenzahnkranz 30 um einen gewissen Winkelbereich und um den Vorsprung 44 als Schwenkachse hin- und hergeschwenkt werden. Weiterhin kann sich der Vorsprung 44 so in radialer Richtung innerhalb der Ausnehmung 46 bewegen, daß insgesamt die Taumelbewegung des Innenzahnkranzes 30 um das Stirnrad 28 trotz des formschlüssigen Eingriffs des Vorsprungs 44 in die Ausnehmung 46 möglich bleibt.

Im gezeigten Ausführungsbeispiel ist der Führungsrand 38 einstückig aus dem Blechmaterial des ortsfesten Gelenkarms 22 geformt. Er setzt sich dabei aus zwei, sich über unterschiedliche Bogenwinkel erstreckenden und nicht miteinander verbundenen Kreisbogenteilstücken zusammen. Das kürzere Bogenstück ist dabei, wie aus der Figur ersichtlich, U-förmig aus dem Gelenkarm 22 ausgestanzt und umgebogen, etwa mittig zu ihm und unmittelbar angrenzend befindet sich die Ausnehmung 46. Diese gezeigte Ausführung kann vielfältig abgewandelt werden. So kann beispielsweise als Führungsrand 38 ein Ring auf den Gelenkarm 22 aufgesetzt, insbesondere aufgeschweißt werden. Weiterhin kann der Führungsrand 38 vollständig entfallen, wenn die Schwenkachse 24 nach vorn verlängert wird und in eine entsprechende Öffnung des Handgriffs 36 reicht, wo sie axial gegenüber dem Handgriff 36 gesichert, allerdings nicht mit diesem drehverbunden ist.

Andererseits kann die Schwenkachse 24 entfallen, wenn der schwenkbare Gelenkarm 20 direkt mit dem ihm zugeordneten Stirnrad 28 verbunden wird. Die Führung des Stirnrades 28 oder des Gelenkarms 20 am ortsfesten Gelenkarm 22 kann durch eine aus einem dieser Teile herausgedrückte, kreisförmige Schulter, der eine entsprechende Vertiefung in dem jeweils anderen Teil entspricht, erreicht werden. Das Stirnrad 28 kann — ähnlich dem Innenzahnkranz 30 — als Ring ausgebildet sein, dessen zylindrische Innenfläche durch einen Führungsrand des ortsfesten Gelenkarms 22 geführt wird, der dem Führungsrand 38 entspricht. Bei dieser Konstruktion kommt zugute, daß der Schwenkwinkel der Gelenkarme 20, 22 gegeneinander nie wesentlich größer als 90° ist, so daß bei einer entsprechend großen Unterbrechung des Führungsrandes eine einfache Befestigung zwischen Stirnrad 28 und schwenkbarem Gelenkarm 20 möglich ist.

Der Handgriff 36 ist ein Kunststoffteil, seine Tiefe bestimmt im wesentlichen die Bautiefe des Gelenkbeschlags. Der Innenzahnkranz 30 ist aus Stahl gefertigt, insbesondere ist er, ebenso wie das Stirnrad 28, ein Präzisionsstanzteil aus Stahlblech. Zwischen dem zylindrischen Außenmantel 42 des Innenzahnkranzes 30 und der Exzenterfläche 32 an der exzentrischen Bohrung 40 des Handgriffs 36 tritt dann ein Reibungsbeiwert $\mu$ auf, der, wie oben erwähnt, dreimal so hoch ist wie der Reibungsbeiwert $\mu$ für Stahl auf Stahl.

Wie sich direkt aus der Figur ersehen läßt, besteht der erfindungsgemäße Gelenkbeschlag im gezeigten Ausführungsbeispiel aus sehr wenig Einzelteilen. Dies vereinfacht die Lagerhaltung und auch die Montage. Weiterhin läßt sich der erfindungsgemäße Gelenkbeschlag sehr flach aufbauen.

Der Handgriff 36 kann, wie im abgebildeten Ausführungsbeispiel gezeigt ist, einstückig ausgebildet sein. Er kann aber ebenso aus zwei Teilen zusammengesetzt sein, z. B. einem Exzenterteil mit der durch eine exzentrische Bohrung 40 gebildeten Exzenterfläche 32 und einem auf dieses Exzenterteil aufstülpbaren oder anderweitig mit ihm zu verbindenden Griffteil. Diese Ausführung ermöglicht eine einfachere Montage gegenüber dem abgebildeten Ausführungsbeispiel und erlaubt die Verwendung unterschiedlicher Materialien (z. B. unterschiedlicher Kunststoffe) für Exzenter- und Griffteil. Entscheidend ist in beiden Ausführungsbeispielen, daß das Griffteil und das Exzenterteil jeweils eine Einheit, nämlich den Handgriff 36, bilden und daß durch das Griffteil direkt (ohne eine zwischengeschaltete Achse) das Exzenterteil antreibbar ist.

Um sicherzustellen, daß die Exzenterfläche 32 den zylindrischen Außenmantel 42 ohne jegliches Spiel umgreift, wird vorgeschlagen, daß diese beiden Teile 32, 42 mit Vorspannung aneinanderliegen. Hierzu kann beispielsweise der Außenmantel 42 gegenüber der Exzenterfläche ein Übermaß aufweisen und eines dieser Teile geschlitzt sein, die die Exzenterfläche 32 bildende Bohrung 40 kann außen durch eine (elastische) Schelle zusammengepreßt werden, oder an einem Teil 32, 42 ist ein elastisch und radial vorspringendes Element angeordnet, z. B. eine gewellte Blattfeder oder ein federbelasteter Schieber, das jegliches Spiel zwischen der Exzenterfläche 32 und dem Außenmantel 42 ausschließt.

Um weiterhin auszuschließen, daß der Gelenkbeschlag durch Rütteln, Stöße oder Wechselbelastungen verstellt werden kann, wird ergänzend oder alternativ zu der soeben beschriebenen Maßnahme vorgeschlagen, zwischen der Drehachse 34 und ihrer Führung eine Hemmeinrichtung vorzusehen. Im gezeigten Ausführungsbeispiel kann hierzu z. B. der Führungsrand 38 die Drehachse 34 des Handgriffs 36 elastisch unter Vorspannung umgreifen, so daß durch die so vergrößerte Reibung einer selbsttätigen Verstellung entgegengewirkt wird. Oder es ist z. B. an der Drehachse 34 des Handgriffs 36 eine Feinverzahnung, Riffelung etc. angebracht, mit der ein vom Führungsrand 38 radial nach innen vorspringendes und zugleich gehaltenes Rastelement zusammenwirkt, das bei einer Drehbewegung des Handgriffs durch einen Benutzer nur geringen Widerstand liefert. Andere Ausbildungen einer Hemmeinrichtung können z. B. eine Schlingfeder, einen Reibbelag etc. aufweisen.

**Patentansprüche**

1. Gelenkbeschlag für Sitze mit einer gegenüber einem Sitzgestell neigungsverstellbaren Rückenlehne, insbesondere Kraftfahrzeugsitze, mit einem an der Rückenlehne zu befestigenden, schwenkbaren Gelenkarm (20), mit einem am Sitzgestell zu befestigenden, ortsfesten Gelenkarm (22) und mit einer Stellvorrichtung (26) für die Winkellage der beiden Gelenkarme (20, 22) zueinander und ihrer Arretierung gegeneinander, die aufweist

einen Innenzahnkranz (30), der einem der beiden Gelenkarme (20 bzw. 22) zugeordnet ist,

ein Stirnrad (28), das mit dem Innenzahnkranz (30) in Eingriff steht, sich innerhalb des Innenzahnkranzes (30) befindet, das dem anderen Gelenkarm (22, 20) zugeordnet ist und dessen Kopfkreisdurchmesser mindestens um eine Zahnhöhe kleiner ist als der Fußkreisdurchmesser des Innenzahnkranzes (30),

eine an einem Gelenkarm (20 bzw. 22) gelagerte Drehachse (34),

einem um diese Drehachse (34) drehbaren Handgriff (36) und

eine auf dieser Drehachse (34) angeordnete, mittels des Handgriffs (36) drehbare Exzenterfläche (32)

a. die eine Exzentrizität aufweist, die zumindest der halben Differenz zwischen dem Fußkreisdurchmesser des Innenzahnkranzes (30) und dem Kopfkreisdurchmesser des Stirnrades (28) entspricht und so bemessen ist, daß eine Selbsthemmung zwischen dem Innenzahnkranz (30) und dem Stirnrad gegeben ist, und

b. die sich in Anlage an einer zylindrischen Führungsfläche eines Zahnteils befindet,

dadurch gekennzeichnet, daß die Exzenterfläche (32) durch eine Innenfläche einer exzentrischen Bohrung (40) des Handgriffs (36) gebildet ist, sich am von der Bedienungsseite abgewandten Teilstück des Handgriffs (36) befindet und führend einen zylindrischen Außenmantel (42) des Innenzahnkranzes (30), der einen größeren Durchmesser als die Verzahnung des Innenzahnkranzes (30) aufweist, umgreift, und daß die Exzenterfläche (32) und der Außenmantel (42) mit Vorspannung aneinanderliegen.

2. Gelenkbeschlag nach Anspruch 1, dadurch gekennzeichnet, daß die Zahnteile (Stirnrad 28 und Innenzahnkranz 30) sich innerhalb der exzentrischen Bohrung (40) befinden.

3. Gelenkbeschlag nach Anspruch 1 oder 2, dadurch gekennzeichnet, daß die Drehachse (34)

einen größeren Durchmesser aufweist als die Exzenterfläche (32) und

durch einen Außenmantel eines hinteren Teilstücks des Handgriffs (36), an dem auch die exzentrische Bohrung (40) vorgesehen ist, gebildet wird, und

daß ein die Drehachse (34) übergreifender und führender Führungsrand (38) an einem Gelenkarm (22) vorsteht.

4. Gelenkbeschlag nach Anspruch 1, dadurch gekennzeichnet, daß die Drehachse (34) durch die verlängerte Schwenkachse (24) gebildet ist, die in eine entsprechende Öffnung des Handgriffs (36) reicht und axial gegenüber dem Handgriff (36) gesichert, jedoch nicht mit diesem drehverbunden ist.

5. Gelenkbeschlag nach einem der Ansprüche 1 bis 4, dadurch gekennzeichnet, daß das Stirnrad (28) starr mit dem schwenkbaren Gelenkarm (20) verbunden ist und im ortsfesten Gelenkarm (22) schwenkbar gelagert ist (Schwenkachse 24).

6. Gelenkbeschlag nach Anspruch 5, dadurch gekennzeichnet, daß der Innenzahnkranz (30) ringförmig ausgebildet ist und einen Vorsprung (44) aufweist, der in eine radial verlaufende Ausnehmung (46) im ortsfesten Gelenkarm (22) eingreift, wobei dieser Eingriff so ausgeführt ist, daß die Taumelbewegung des Innenzahnkranzes (30) um das Stirnrad (28) nicht behindert wird.

7. Gelenkbeschlag nach einem der Ansprüche 1 bis 6, dadurch gekennzeichnet, daß zwischen dem Außenmantel (42) und der Exzenterfläche (32) ein elastisches Element, insbesondere eine gewellte Blattfeder oder ein federbelasteter Schieber vorgesehen ist, das jegliches Spiel zwischen der Exzenterfläche (32) und dem Außenmantel (42) ausschließt.

8. Gelenkbeschlag nach einem der Ansprüche 1 bis 6 dadurch gekennzeichnet, daß die die Exzenterfläche (32) bildende Bohrung (40) von außen durch eine elastische Schelle zusammengepreßt wird.

**Claims**

1. Hinge fitting for seats having a backrest that can be angularly adjusted with respect to a seat frame, especially for motor vehicle seats, having a pivotable hinge arm (20) to be secured to the backrest, having a stationary hinge arm (22) to be secured to the seat frame, and having an adjusting device (26) for the angular position of the two hinge arms (20, 22) with respect to each other and their locking against each other, which device has

an internally toothed crown (30) which is associated with one of the two hinge arms (20 or 22),

a spur wheel (28) which engages the internally toothed crown (30), is inside the internally toothed crown (30), is associated with the other hinge arm (22, 20) and the tip diameter of which is at least one tooth depth smaller than the root diameter of the internally toothed crown (30),

a hinge pin (34) mounted on one hinge arm (20 or 22),

a hand grip (36) rotatable about this hinge pin (34), and

arranged on this hinge pin (34) and rotatable by means of the hand grip (36) an eccentric face (32), which

a. has an eccentricity which corresponds at least to half the difference between the root diameter of the internally toothed crown (30) and the tip diameter of the spur wheel (28) and has dimensions such that there is self-locking between the internally toothed crown (30) and the spur wheel, and which

b. lies against a cylindrical guide surface of one toothed part,

characterised in that the eccentric face (32) is formed by an internal face of an eccentric bore (40) of the hand grip (36), is on the part of the hand grip (36) remote from the operating side and, in guiding manner, encompasses a cylindrical external casing (42) of the internally toothed crown (30), which casing has a larger diameter than the toothing of the internally toothed crown (30), and the eccentric face (32) and the external casing (42) lie against each other under bias. .

2. Hinge fitting according to claim 1, characterised in that the toothed parts (spur wheel 28 and internally toothed crown 30) are inside the eccentric bore (40).

3. Hinge fitting according to claim 1 or 2, characterised in that the hinge pin (34)

has a larger diameter than the eccentric face (32), and

is formed by an external casing of a rear part of the hand grip (36) on which the eccentric bore (40) is also provided, and in that a guiding edge (38) overlapping the hinge pin (34) projects at one hinge arm (22).

4. Hinge fitting according to claim 1, characterised in that the hinge pin (34) is formed by the extended pivot pin (24) which extends into a corresponding aperture of the hand grip (36) and is axially secured with respect to the hand grip (36) but is not rotatably connected therewith.

5. Hinge fitting according to one of claims 1 to 4, characterised in that the spur wheel (28) is rigidly connected to the pivotable hinge arm (20) and is pivotally mounted in the stationary hinge arm (22) (pivot pin 24).

6. Hinge fitting according to claim 5, characterised in that the internally toothed crown (30) is designed in the shape of a ring and has a projection (44) which engages in a radially running recess (46) in the stationary hinge arm (22), this engagement being so designed that the tumbling motion of the internally toothed wheel (30) about the spur wheel (28) is not hindered.

7. Hinge fitting according to one of claims 1 to 6, characterised in that there is provided between the external casing (42) and the eccentric face (32) a resilient member, especially a corrugated leaf spring or a spring-loaded slider, which excludes any play between the eccentric face (32) and the external casing (42).

8. Hinge fitting according to one of claims 1 to 6, characterised in that the bore forming the eccentric face (32) is pressed together from the outside by a resilient clip.

## Revendications

1. Ferrure d'articulation pour sièges comportant un dossier dont l'inclinaison par rapport à l'assise est réglable, en particulier pour sièges d'automobiles, comprenant un bras d'articulation pivotant (20) à fixer au dossier, un bras d'articulation stationnaire (22) à fixer au cadre du siège et un dispositif de réglage (26) pour régler la position angulaire relative des deux bras d'articulation (20, 22) et pour les bloquer l'un par rapport à l'autre, dispositif qui possède

une couronne dentée intérieure (30) coordonnée à l'un des deux bras d'articulation (20 ou 22),

un pignon droit (28), en prise avec la couronne (30) et situé à l'intérieur de la couronne, qui est coordonné à l'autre bras d'articulation (22, 20) et dont le diamètre de tête est inférieur d'au moins une hauteur de dent au diamètre de pied de la couronne dentée intérieure (30),

un axe de rotation (34) monté sur un bras d'articulation (20 ou 22),

un élément de commande à main (36) rotatif autour de cet axe de rotation (34) et

une surface d'excentrique (32) disposée sur cet axe de rotation (34) et pouvant être tournée par cet élément de commande (36), surface d'excentrique qui

a. présente une excentricité qui correspond au moins à la moitié de la différence entre le diamètre de pied de la couronne dentée intérieure (30) et le diamètre de tête du pignon droit (28), et qui est choisie de manière qu'un autoblocage se produise entre la couronne (30) et le pignon, et

b. est appliquée contre une surface de guidage cylindrique d'une pièce dentée,

caractérisée en ce que la surface d'excentrique (32) est formée par une surface interne d'un alésage excentré (40) de l'élément de commande à main (36), la surface d'excentrique étant située sur la portion de l'élément de commande (36) éloignée du côté commande, la surface d'excentrique entourant, en assurant son guidage, une paroi extérieure cylindrique (42) de la couronne dentée intérieure (30), paroi qui possède un plus grand diamètre que la denture de la couronne (30), et que la surface d'excentrique (32) et la paroi extérieure (42) sont appliquées l'une contre l'autre avec prétension.

2. Ferrure selon la revendication 1, caractérisée en ce que les pièces dentées (pignon droit 28 et couronne dentée intérieure 30) sont situées à l'intérieur de l'alésage excentré (40).

3. Ferrure selon la revendication 1 ou 2, caractérisée en ce que l'axe de rotation (34)

possède un plus grand diamètre que la surface d'excentrique (32) et

est formé par une paroi extérieure d'une portion arrière de l'élément de commande à main (36), portion sur laquelle est prévu également l'alésage excentré (40), et

que la ferrure comporte un rebord de guidage (38) disposé sur un bras d'articulation (22), rebord qui s'emboîte sur l'axe de rotation (34) et guide cet axe.

4. Ferrure selon la revendication 1, caractérisée en ce que l'axe de rotation (34) est formé par un prolongement de l'axe de pivotement (24), prolongement qui pénètre dans une ouverture correspondante de l'élément de commande (36) et est immobilisé axialement par rapport à cet élément, mais n'est pas relié en rotation à cet élément.

5. Ferrure selon l'une des revendications 1 à 4, caractérisée en ce que le pignon droit est relié rigidement au bras d'articulation pivotant (20) et est monté pivotant (axe de pivotement 24) dans le bras d'articulation fixe (22).

6. Ferrure selon la revendication 5, caractérisée en ce que la couronne dentée intérieure (30) possède une forme annulaire et présente une saillie (44) qui pénètre dans un évidement (46) s'étendant radialement dans le bras d'articulation fixe (22), la pénétration étant telle que le mouvement de nutation de la couronne (30) autour du pignon (28) n'est pas entravé.

7. Ferrure selon l'une des revendications 1 à 6, caractérisée par la disposition, entre la paroi extérieure (42) et la surface d'excentrique (32), d'un élément élastique, en particulier d'un ressort-lame ondulé ou d'un poussoir chargé par ressort, qui exclut tout jeu entre la surface d'excentrique (32) et la paroi extérieure (32).

8. Ferrure selon l'une des revendication 1 à 6, caractérisée en ce que l'alésage (40) formant la surface d'excentrique (32) est comprimé de l'extérieur par un collier élastique.